# EUROPÄISCHE PATENTSCHRIFT

(11) **EP 0 431 022 B1**
(45) Veröffentlichungstag und Bekanntmachung des Hinweises auf die Patenterteilung: **21.07.1993**
(21) Anmeldenummer: 89909677.0
(22) Anmeldetag: 23.08.1989
(51) Int. Cl.: A61C 17/06

(54) **VERFAHREN UND EINRICHTUNG ZUR HINTANHALTUNG VON FUNKTIONSSTÖRUNGEN EINER ZAHNÄRZTLICHEN ABSAUGANLAGE**
PROCESS AND DEVICE FOR PREVENTING MALFUNCTION OF A DENTAL EVACUATION SYSTEM
PROCEDE ET DISPOSITIF POUR EMPECHER LES DEFAILLANCES D'UN SYSTEME D'ASPIRATION DENTAIRE

(30) Priorität: 25.08.1988 AT 2096/88
(43) Veröffentlichungstag der Anmeldung: 12.06.1991
(60) Teilanmeldung: 92113515.8
(73) Patentinhaber: Trawöger, Werner, 6020 Innsbruck (AT); PREGENZER, Bruno, 6173 Oberperfuss (AT)
(72) Erfinder: Trawöger, Werner, 6020 Innsbruck (AT); PREGENZER, Bruno, 6173 Oberperfuss (AT)
(74) Vertreter: Hofinger, Engelbert, DDr.
(86) Internationale Anmeldenummer: AT8900073
(87) Internationale Veröffentlichungsnummer: WO9001909

(56) Entgegenhaltungen:
- EP-A- 0 124 887
- DE-A- 2 814 401
- DE-A- 3 101 954
- Beipackzettel der Fa. Cattani S.p.A. zu Antischaumtabletten, die als "ANTISCHIUMOGENO PER ASPIRATORI CHIRURGICI" vor dem Zeitrang vorliegender Anmeldung vertrieben worden sind.

## Beschreibung

Die Erfindung betrifft ein Verfahren und eines Einrichtung zur Hintanhaltung von durch Schaumbildung bedingten Funktionsstorungen einer zahnärztlichen Absauganlage, in der mittels Saugluft aus dem Mund des Patienten ein Flüssigkeitsfeststoffgemisch abgesaugt und über eine erste Saugstrecke gefördert wird, die in einem Mundstück beginnt und in einem Abscheider endet, in dem Luft abgetrennt und zur Saugpumpe geführt wird und nach Abtrennung der Luft die Feststoffe aus der Flüssigkeit entfernt werden, wobei dem Gemisch innerhalb der ersten Saugstrecke in Intervallen ein ein Antischaummittel enthaltendes fließfähiges Zusatzmittel zugegeben wird. Die Abtrennung der Feststoffe erfolgt insbesondere durch Sedimentation in einem abnehmbaren Sammelbehälter, worauf die Flüssigkeit dem Abfluß übergeben wird.

Zahnärztliche Sauganlagen, wie sie beispielsweise in der WO-A-86/03669 beschrieben sind, sind aufgrund der Zusammensetzung des abzusaugenden und zu behandelnden Gemisches (Blut, Speichel, Wasser, Eiter, Zahnmaterial, Amalgamreste, usw.) mit besonderen Problemen behaftet, die zu empfindlichen Funktionsstörungen führen können. Diese Probleme liegen in der Reinigung und in der Desinfektion des vom Gemisch durchströmten Teiles der Anlage, der in weiterer Folge als erste Saugstrecke bezeichnet wird, und weiters auch darin, daß die Vermischung von Blut mit dem bei der zahnärztlichen Tätigkeit immer wieder zu verwendenden Wasserstoffperoxid zu einer intensiven Schaumbildung führen kann, die die Anlage abschaltet, da der Auslaß der abgetrennten Saugluft aus dem Abscheider natürlich gegen mitströmende Fremdstoffe gesichert sein muß. Der entstehende Schaum weist dabei eine besonders grobe Stabilität auf, und dessen selbsttätige Zersetzung bedarf mehrerer Stunden.

Gegen diese Schaumbildung werden von der Fa. Cattani S.p.A., Parma, Italien wasserlösliche Antischaummittel angeboten, die, wie der Gebrauchsanweisung zu entnehmen ist, in einen in der Schlauchablage, also in der ersten Saugstrecke, angeordneten Filter eingesetzt werden. Die Antischaumtabletten werden im Laufe von 1 bis 2 Tagen vom abgesaugten Flüssigkeitsfeststoffgemisch aufgelöst, wobei die sich jeweils lösende Menge von verschiedenen nicht beeinflußbaren Faktoren abhängig und damit nicht dosierbar ist. Eine übermäßige Schaumentwicklung kann insbesondere bei fortgeschrittener Auflösung nicht mehr verhindert werden.

Die Erfindung hat es sich daher zur Aufgabe gestellt, ein Verfahren und eine Einrichtung zu schaffen, die eine kontrollierte bzw. kontrollierbare Zugabe des Antischaummittels ermöglichen. Wartungsintervalle sollen dadurch möglichst so gestreckt werden, daß entsprechende Wartungsarbeiten gleichzeitig mit einem Service der gesamten Anlage oder bei der Entleerung des Sammelbehälters, usw. erforderlich werden.

Gemäß der Erfindung wird dies dadurch erreicht, daß dem Gemisch während des Betriebszeitraumes der Absauganlage ein ein Antischaummittel enthaltendes fließfähiges Zusatzmittel zugegeben wird.

Da das Antischaummittel Bestandteil eines Zusatzmittels ist, das fließfähig ist, kann die Zugabe wesentlich exakter dosiert und dem Bedarf angepaßt werden. Es lassen sich größere Vorräte in einem Vorratsbehälter bereitstellen. Das Zusatzmittel kann weiters auch ein Desinfektionsmittel und/oder ein Reinigungsmittel enthalten. Vorzugsweise wird das Zusatzmittel aus einer Mischung aller verwendbaren oder benötigten Mittel bestehen, wobei der Auswahlbereich der verwendbaren Reinigungs- oder Desinfektionsmittel sich ebenfalls erweitert. Es können ohne weiteres auch an sich stark schäumende Mittel verwendet werden, da das Zusatzmittel ja auch das Antischaummittel enthält.

Die Zugabe des Zusatzmittels bzw. der Zusatzmittelmischung erfolgt innerhalb der oben definierten ersten Saugstrecke, die beim Mundstück beginnt. Bei einer neu zu erstellenden Absauganlage wird die Zugabe daher vorzugsweise dort erfolgen, bei der Umrüstung oder Ergänzung von Anlagen, die bereits eine Reinigungsmöglichkeit besitzen, kann sich das erfindungsgemäbe Verfahren auf die Zugabe des Antischaummittels beschränken. Diese wird dann bevorzugt am Ende der ersten Saugstrecke, also im Abscheider selbst erfolgen. Werden die Feststoffe sedimentiert, so ist vorzugsweise vorgesehen, daß das das Antischaummittel enthaltende Zusatzmittel portionsweise der sich oberhalb der sedimentierenden Feststoffe sammelnden Flüssigkeit zugegeben wird.

Die Zugabe des Zusatzmittels kann während des Betriebszeitraumes in gleichmäßigen Intervallen, beispielsweise über ein Uhrwerk viertelstündlich erfolgen. Eine bevorzugte Ausführung sieht jedoch vor, daß durch Erzeugen eines Unterdrucks in der ersten Saugstrecke die Portion des Zusatzmittels eingesaugt wird. Dies findet während des Betriebszeitraumes häufig genug statt, da sich die Sauganlage jeweils beim Abnehmen des Mundstückes von der Schlauchablage einschaltet, d. h. annähernd hundert- bis zweihundertmal während einer ganztägigen Ordination. Bei einer derartig häufigen Zugabe kann die jeweils zugeführte Portion des Zusatzmittels auf wenige Tropfen beschränkt werden, sodaß kein übermäßiger Verbrauch erfolgt.

Eine Einrichtung zur Durchführung des Verfahrens umfaßt erfindungsgemäß die in Anspruch 5 augegebenen Merkmale.

Die Intervallsteuerung kann über eine Steuereinheit erfolgen, wobei die Intervalle wählbar gleichmäßig oder ungleichmäßig sein können. Dies erfordert jedoch einen zusätzlichen Aufwand an Ausrüstungsteilen, wenn die Steuerung elektrisch oder elektronisch erfolgt.

Die Steuerung der Dosiereinrichtung durch den Saugluftdruck ist wesentlich einfacher, da durch die oftmalige Schaltung die benötigten Steuerimpulse gegeben sind.

Eine bevorzugte Ausführung einer Ventileinheit der Dosiereinrichtung besteht beispielsweise darin, daß sie zwei Rückschlagventile und eine dazwischen angeordnete Dosierpumpe umfaßt, die elektrisch oder durch die Druckänderungen betätigt wird. Eine kostengünstige Ausbildung der Rückschlagventile sieht diese in Form von Klappventilen vor, von denen zumindest eines zur Rückstellung gewichtsbelastet ist. Dieses Klappventil öffnet dann nach oben und auf der Ventilklappe ruht der Auflagekörper, insbesondere eine Auflagekugel. Als Dosierpumpe eignet sich insbesondere eine Hubkolbenpumpe, wobei bevorzugt eine Membranpumpe eingesetzt wird, die eine eigene Kolbenabdichtung erübrigt. Dabei kann eine Bewegung der Membran vorteilhaft durch den Unterdruck in der Sauganlage erzielt werden, und die Rückbewegung kann durch eine Rückstellfeder oder durch Schwerkraft erfolgen.

In einer anderen Ausführung der Einrichtung ist vorgesehen, daß der Behälter oberhalb der Dosiereinrichtung angeordnet ist, die ein in der Zuleitung angeordnetes Absperrventil umfaßt, wobei das Zusatzmittel aus dem Behälter unter Schwerkrafteinfluß abfließt. Als Absperrventil kann ein Magnetventil, oder vorzugsweise wiederum ein durch den Unterdruck gesteuertes Ventil verwendet werden.

Die Saugleistung einer Sauganlage ist im allgemeinen sehr hoch, wobei Arbeitsdrücke von 0,1 bar ohne weiteres erzielt werden. Es ist daher ohne Bedeutung, wenn innerhalb der Saugstrecke geringe Mengen an Außenluft eindringen können. Dadurch ergibt sich bevorzugt eine Ausführung, in der der Auslaß der Dosiereinrichtung einem unter Atmosphärendruck stehenden Fülltrichter zugeordnet ist, dessen Auslauf innerhalb der ersten Saugstrecke in das Unterdrucksystem mündet. Da die Dosiermenge nur wenige Tropfen umfaßt, kann der Auslaufquerschnitt sehr klein gehalten werden, wobei aber auch kapillare Kräfte, die das Abfließen unter Schwerkraft verhindern könnten, keine Störungen verursachen, da beim Einschalten der Sauganlage auf jeden Fall die im Fülltrichter bzw. in dessem Auslauf zurückgebliebene Portion des Zusatzmittels in die erste Saugstrecke eingesaugt wird.

Eine weitere Ausführung sieht vor, daß die Zuleitung vom Behälter luftdicht in das Unterdrucksystem der Sauganlage innerhalb der ersten Saugstrecke mündet, und als Dosiereinrichtung ein Absperrventil vorgesehen ist. Nach dieser Ausführung wird die vom elektrisch oder durch Unterdruck betätigten Absperrventil freigegebene Portion direkt aus dem Behälter eingesaugt. In den bisher beschriebenen Ausführungen steht das Zusatzmittel im Behälter unter normalem Luftdruck. Es ist aber auch ebenso möglich, den Behälter ins Unterdrucksystem der Sauganlage zu integrieren, und diesen mit einem heberartigen überlaufrohr auszustatten, wobei die durch die Abwinklung des überlaufrohres gegebene Druckdifferenz bereits zur Abgabe der zu dosierenden Portion aus dem Vorrat ausreicht.

Nachstehend wird nun die Erfindung an Hand der Figuren der beiliegenden Zeichnungen näher beschrieben, ohne darauf beschränkt zu sein.

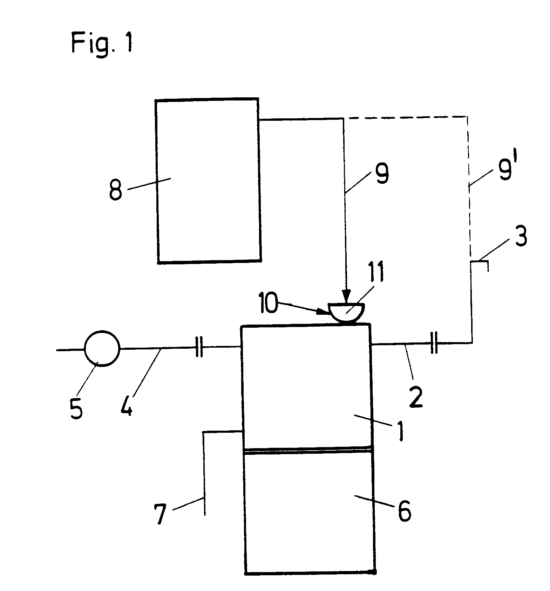

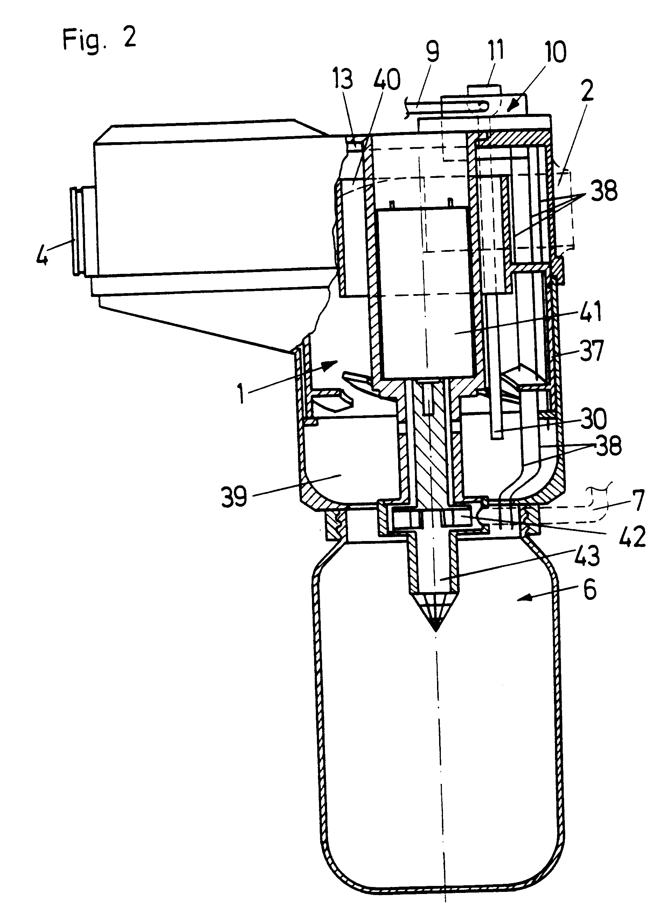

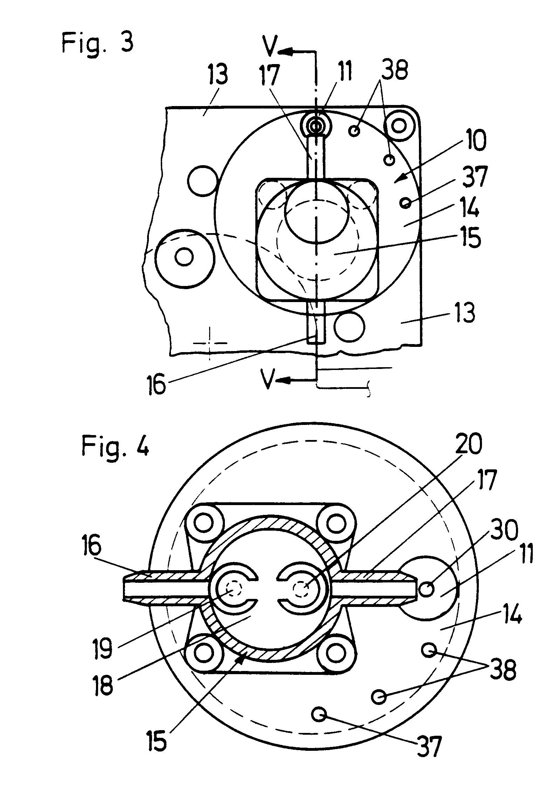

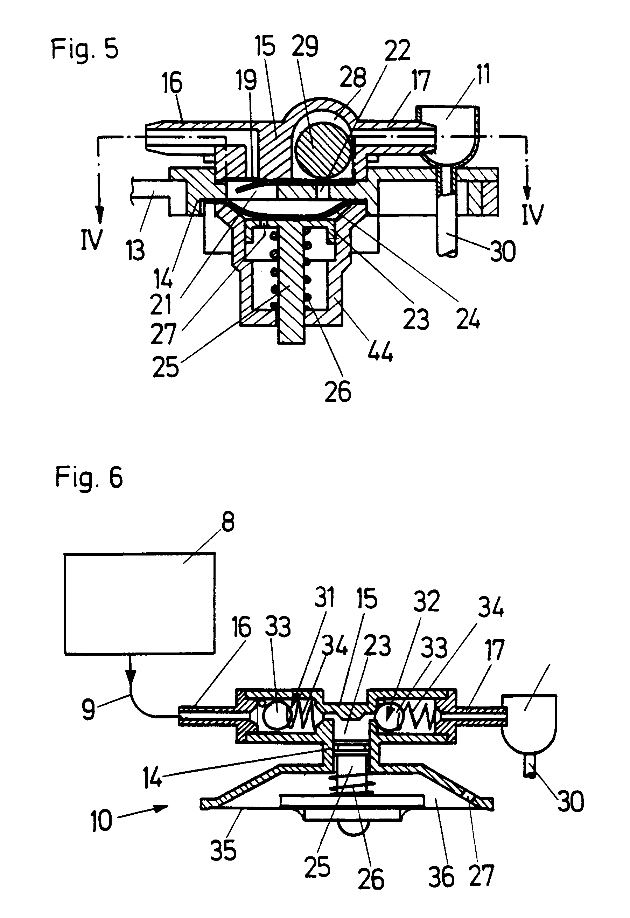

Die Fig. 1 zeigt eine schematische Darstellung einer bevorzugten Ausführung der Erfindung, die Fig. 2 einen Vertikatschnitt durch ein Ausführungsbeispiet mit einer auf dem Abscheider angeordneten Dosiereinrichtung, die Fig, 3 eine Draufsicht auf die Ausführung nach Fig. 2, die Fig, 4 einen Schnitt nach der Linie IV-IV von Fig. 5, die Fig. 5 einen Schnitt nach der Linie V-V von Fig. 3, die Fig, 6 einen Schnitt ähntich Fig. 5 durch eine weitere Ausführung einer Dosiereinrichtung,und die Fig, 7 und 8 schematische Darstellungen zweier weiterer Ausführungen der Erfindung.

Eine zahnärztliche Absauganlage weist gemäß Fig. 1 eine Saugpumpe 5 auf, deren Saugleitung an einem Mundstück 3 eines Saughandstückes ihren Anfang nimmt. Die zur Pumpe 5 führende Saugleitung umfaßt einen ersten Abschnitt 2 zwischen dem Mundstück 3 und dem Abscheider 1.Im Abscheider 1 findet eine Trennung des durch das Mundstück 3 aufgenommenen Saugluft-Flüssigkeitsfeststoffgemisches statt, wobei die abgetrennte Saugluft über einen zweiten Abschnitt 4 der Saugleitung zur Pumpe 5 gelangt, die Flüssigkeit den Abscheider 1 über die Abflußleitung 7 verläßt, und die Feststoffe in einem abnehmbaren Sammelbehälter 6 gesammelt werden, in dem sie vorzugsweise sedimentieren. Ein Behälter 8 dient zur Aufnahme eines reinigenden und/oder desinfizierenden und/oder schaumzerstörenden Zusatzmittels, und ist mit einer Zuleitung 9 versehen, in der eine Dosiereinrichtung 10 enthalten ist, mittels der das Zusatzmittel in Portionen von wenigen Tropfen in eine erste Saugstrecke der Anlage zugeführt wird. Diese erste Saugstrecke umfaßt den vom Gemisch durchströmten Teil der Sauganlage, d.h. sie schließt das Mundstück 3 und den Abscheider 1 ein. Die Zuleitung des Zusatzmittels kann auch an einer anderen Stelle der ersten Saugstrecke erfolgen, wie dies durch die strichlierte Linie 9' angedeutet ist.

Der in Fig. 2 dargestellte Abscheider weist an der Eingangsseite des ersten Abschnitts 2 der Saugleitung einen Luftabscheidezyklon 40 auf, von dem aus die reine Saugluft über den nicht näher gezeigten Teil des Abscheiders 1 zum Anschluß für den zweiten Abschnitt 4 der Saugleitung führt. Innerhalb des Zyklons 40 ist ein Motor 41 angeordnet, der eine Pumpe 42 trägt, von der die Abflußleitung 7 zur Austragung der abgetrennten Flüssigkeit ausgeht. Der Pumpe 42 ist ein in den abnehmbaren Sammelbehälter 6 ragendes Saugrohr 43 zugeordnet, und in Höhe der Pumpe 42 enden Füllstandsfühler 38, über die die Pumpe 42 geschaltet wird. Ein dritter Füllstandsfühler 37 endet etwas oberhalb der Pumpe 42, der bei überschreitung dieses Niveaus die Sauganlage abschaltet und die Mitnahme von Flüssigkeit zum zweiten Abschnitt 4 unterbindet. Der Fühler 37 spricht naturgemäß auch auf entstehenden Schaum im Flüssigkeitssammelraum 39 an.

Die Dosiereinrichtung 10 für über die Zuleitung 9 kommende Zusatzmittel ist in eine Abdeckung 13 des Abscheiders 1 eingesetzt.

Wie aus den Fig. 3 bis 5 im Detail ersichtlich, umfaßt die Dosiereinrichtung 10 einen Grundkörper 14, der einen Ventilkörper 15 trägt, an dem ein Einlaß 16 und ein Auslaß 17 vorgesehen sind. Der Ventilkörper 15 und der Grundkörper 14 fixieren eine Membran 18, die zwei Ventilklappen 19, 20 aufweist, die Durchtrittsöffnungen 21,22 im Grundkörper 14 verschließen bzw. freigeben. Die Ventilklappe 19 verschließt den Einlaß 16 und öffnet nach unten in einen Dosierraum 23, der von einer Pumpenmembran 24 der Dosierpumpe umschlossen ist. Die Pumpenmembran 24 ist zwischen dem Grundkörper 14 und einem Gegenstück 44 eingespannt und liegt somit innerhalb des Abscheiders 1, wobei nicht gezeigte Befestigungsschrauben den Ventilkörper 15, den Grundkörper 14 und das Gegenstück 44 miteinander verbinden. Im Gegenstück 44 ist ein die Pumpenmembran 24 von außen beaufschlagender Kolben 25 verschiebbar gelagert, der eine öffnung 27 aufweist, und dem eine Rückstellfeder 26 zugeordnet ist.

Die Ventilklappe 20, als Teil des Auslaßventiles öffnet nach oben in einen Austrittsraum 28, in dem eine Kugel 29 als Belastungsgewicht der Ventilklappe 20 angeordnet ist. Oer Auslaß 17 der Dosiereinrichtung 10 ragt in einen zur Atmosphäre offenen Fülltrichter 11, der im Grundkörper 14 angeordnet ist, und an den ein Auslaufrohr 30 anschließt, das in den Flüssigkeitssammelraum 39 ragt.

Die Portionierung des im Behälter 8 bevorrateten Zusatzmittels erfolgt nun unter dem Einfluß der Druckänderungen in der Sauganlage wie folgt: Bei abgestellter Sauganlage ist die Pumpenmembran 24 durch die Rückstellfeder 26 an die Unterseite des Grundkörpers 14 angedrückt, und das in der Zuleitung 9 stehende Zusatzmittel am Durchfluß durch die Dosiereinrichtung 10 damit gehindert. Beim Einschalten der Sauganlage wird durch den außenseitig an der Pumpenmembran 24 anstehenden Unterdruck diese gegen die Rückstellfeder 26 nach unten gezogen, worauf Zusatzmittel in den Dosierraum 23 durch die geöffnete Ventilklappe 19 nachströmt. Die Ventilklappe 20 ist geschlossen und vom Gewicht der Kugel 29 belastet. über den Fülltrichter 11 gelangt eine geringe, unschädliche Menge von Außenluft in den Abscheider 1.

Sobald die Sauganlage durch Einhängen des Mundstückes 3 in die Ablagekonsole abgestellt wird, bewegt sich der Kolben 25 durch die Rückstellfeder 26 nach oben, und preßt die Pumpenmembran 24 an die Unterseite des Grundkörpers 14. Die Ventilklappe 19 schließt und die Ventilklappe 20 öffnet unter Anhebung der Kugel 29. Die einige Tropfen umfassende Portion des Zusatzmittels (die Darstellung in den Fig. 4 und 5 entspricht der doppelten natürlichen Größe) gelangt über den Auslaß 17 in den Einfülltrichter 11, aus dem sie über das Abflußrohr 30 der im Flüssigkeitssammelraum 39 befindlichen Flüssigkeit zugegeben wird. Ist das Zusatzmittel ein Antischaummittel,wird Schaumbildung behindert und entstandener Schaum zerstört. Ist das Zusatzmittel ein Desinfektionsmittel werden in der abgetrennten Flüssigkeit enthaltene Keime unschädlich gemacht.

Beim Wiedereinschalten der Anlage wird eventuell verbleibender Rest der gerade eingespeisten Portion durch die Saugwirkung aus dem offenen Fülltrichter 11 abgesaugt, sodaß auch bei einer Kapillarwirkung des Abflußrohres 30 die Portion vollständig zugegeben wird. Die Pumpenmembran 24 wird durch den Unterdruck unter Kompression der Rückstellfeder 26 nach unten gedrückt, sodaß sich der Dosierraum 23 vergrößert, wobei über die sich öffnende Ventilklappe 19 die nächste Portion aus dem Behälter 8 nachfließt. Die geschlossene, von der Kugel 29 belastete Ventilklappe 20 verhindert die Ansaugung von Außenluft über den Auslaß 17. Auf diese Weise wird bei jedem Abschalten der Sauganlage, also zu Beginn der Ruhepause, eine Portion des Zusatzmittels in das Innere des Abscheiders überführt.

Die in Fig. 6 gezeigte Ausführung der Dosiereinrichtung 10 arbeitet in entgegengesetzter Weise, d.h. die überführung der dosierten Portion in den Abscheider 1 erfolgt bei jedem Einschalten der Sauganlage, also zu Beginn der Arbeitsphase. Als Ventile sind in dieser Ausführung Rückschlagventile 31,32 mit kugeligen Ventilkörpern 33 und Rückschlagfedern 34 vorgesehen, und der Dosierraum 23 wird direkt vom abgedichtet im Grundkörper 14 geführten Kolben 25 begrenzt, dem wiederum die Rückstellfeder 26 zugeordnet ist. Die Dosiereinrichtung gemäß Fig. 6 ist ebenfalls zum Einbau in die Abdeckung 13 des Abscheiders geeignet, kann jedoch auch als abgeschlossener Teil an anderer Stelle montiert werden. In dieser Ausführung wird nämlich durch Anlegung des Unterdruckes an die öffnung 27 in einen sonst geschlossenen Saugraum 26 eine Membran 35 angehoben, an der der Kolben 29 befestigt ist, und bei Aufhebung des Unterdruckes diese durch die Feder 26 oder durch ihr Eigengewicht wieder in die gezeigte Stellung überführt. Die Dosierung des Zusatzmittels erfolgt entsprechend der Ausführung nach den Fig. 3 bis 5.

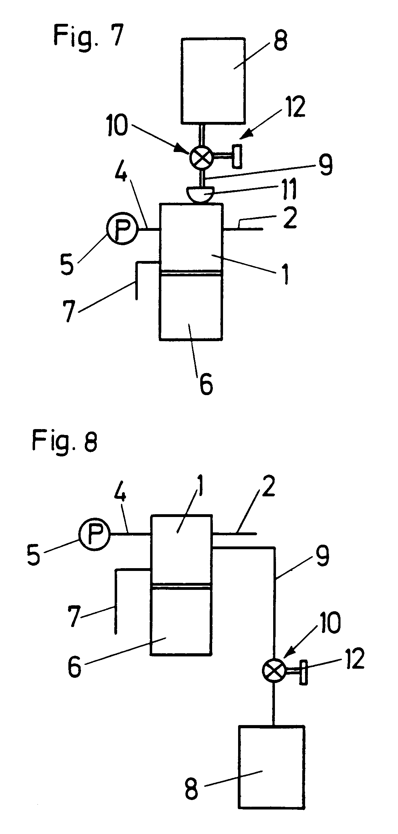

Wie bereits erwähnt, ist die Ausnutzung der Druckänderung für die Betätigung der Dosiereinrichtung von besonderem Vorteil, da zusätzliche Steuereinrichtungen entfallen. Die Betätigung der Dosiereinrichtung könnte aber ebenso über Magnetventile, bzw. auch mechanisch erfolgen, wobei in diesen Ausführungen auch andere Intervalle als die Schaltintervalle der Absauganlage herangezogen werden können. So könnte die portionierte Zugabe auch mittels einer Schaltuhr in gleichen Abständen erfolgen. Ein Beispiel für eine derartige Ausführung zeigt schematisch Fig. 7. Hier ist der Behälter 8 oberhalb des Abscheiders 1 angeordnet, sodaß das Zusatzmittel durch die Zuleitung 9 unter Schwerkraft in den Fülltrichter 11 fließen kann, sobald ein Absperrventil 12 beliebiger Art geöffnet und, zeit- oder durchflußmengenabhängig, etwa durch Zählen der Tropfen, wieder geschlossen wird. In dieser Ausführung kann die Zugabe zu jedem beliebigen Zeitpunkt ausgeführt werden.

Eine weitere, wiederum mittels des Unterdruckes dosierende Ausführung zeigt Fig. 8, wobei hier durch den Unterdruck das Zusatzmittel aus dem unterhalb des Abscheiders 1 liegenden Behälter 8 angesaugt wird, sobald das wiederum zeit- oder durchflußmengengesteuerte Absperrventil 12, das die Dosiereinrichtung 10 bildet, öffnet und schließt. Nach dieser Ausführung kann die Dosierung zu jedem Zeitpunkt während einer Arbeitsphase erfolgen.

Zurückkommend auf Fig. 1 ist es ohne weiteres möglich, Dosiereinrichtungen vor allem der in den Fig. 6 bis 8 beschriebenen Ausführungen an jeder Stelle der ersten Saugstrecke münden zu fassen, wie mit der strichlierten Leitung 9' angedeutet wird. Enthält der Behälter 8 auch Reinigungs- und/oder Desinfektionsmittel als Zusatzmittel, so ist eine Zugabe direkt am Mundstück 3 von Vorteil, wodurch die gesamte, mit Flüssigkeit und Feststoffen in Berührung kommende erste Saugstrecke reinigbar, desinfizierbar und mit Antischaummittef versetzbar ist.

## Patentansprüche

1. Verfahren zur Hintanhaltung von durch Schaumbildung bedingten Funktionsstörungen einer zahnärztlichen Absauganlage, in der mittels Saugluft aus dem Mund des Patienten ein Flüssigkeitsfeststoffgemisch abgesaugt und über eine erste Saugstrecke (2) gefördert wird, die in einem Abscheider (1) endet, in dem Luft abgetrennt und zur Saugpumpe (5) geführt wird und nach Abtrennung der Luft die Feststoffe aus der Flüssigkeit entfernt werden, wobei dem Gemisch innerhalb der ersten Saugstrecke (2) in Intervallen ein Antischaummittel zugegeben wird, dadurch gekennzeichnet, daß dem Gemisch während des Betriebszeitraumes der Absauganlage ein ein Antischaummittel enthaltendes fließfähiges Zusatzmittel zugegeben wird.

2. Verfahren nach Anspruch 1, wobei die Feststoffe aus der Flüssigkeit sedimentiert werden, dadurch gekennzeichnet, daß das das Antischaummittel enthaltende Zusatzmittel portionsweise der sich oberhalb der sedimentierenden Feststoffe sammelnden Flüssigkeit zugegeben wird.

3. Verfahren nach Anspruch 1, dadurch gekennzeichnet, daß das das Antischaummittel enthaltende Zusatzmittel am Mundstück zugegeben wird.

4. Verfahren nach einem der Ansprüche 1 bis 3, dadurch gekennzeichnet, daß durch Erzeugen eines Unterdrucks in der ersten Saugstrecke (2) die Portion des Zusatzmittels eingesaugt wird.

5. Einrichtung zur Durchführung des Verfahrens nach einem der Ansprüche 1 bis 4, dadurch gekennzeichnet, daß sie einen Behälter (8) zur Aufnahme eines Vorrats des ein Antischaummittel enthaltenden Zusatzmittels, eine durch den Saugluftdruck gesteuerte Dosiereinrichtung (10) und eine Intervallsteuereinrichtung zur jeweiligen Zugabe einer Portion des Zusatzmittels aus dem Vorrat während des Betriebszeitraumes der Absanganlage umbaßt.

6. Einrichtung nach Anspruch 5, dadurch gekennzeichnet, daß die Dosiereinrichtung zwei Rückschlagventile (19, 20; 31, 32) und eine dazwischen angeordnete Dosierpumpe umfaßt.

7. Einrichtung nach Anspruch 6, dadurch gekennzeichnet, daß die Rückschlagventile als Klappenventile (19, 20) ausgebildet sind, von denen eines gewichtsbelastet ist.

8. Einrichtung nach Anspruch 6, dadurch gekennzeichnet, daß die Dosierpumpe als Membranpumpe ausgebildet ist.

9. Einrichtung nach Anspruch 5, dadurch gekennzeichnet, daß der Behälter (8) oberhalb der Dosiereinrichtung (10) angeordnet ist, die ein in der Zuleitung (9, 9') angeordnetes Absperrventil (12) umfaßt, wobei das Zusatzmittel aus dem Behälter (8) unter Schwerkrafteinfluß abfließt.

10. Einrichtung nach einem der Ansprüche 5 bis 9, dadurch gekennzeichnet, daß der Auslaß (17) der Dosiereinrichtung (10) einem unter Atmosphärendruck stehenden Fülltrichter (11) zugeordnet ist, dessen Auslauf (30) innerhalb der ersten Saugstrecke (2) der Sauganlage mündet.

11. Einrichtung nach Anspruch 5, dadurch gekennzeichnet, daß die Zuleitung (9) vom Behälter (8) luftdicht innerhalb der ersten Saugstrecke (2) der Absauganlage mündet, und als Dosiereinrichtung ein Absperrventil (12) vorgesehen ist.

## Claims

1. A method of suppressing malfunctions caused by foaming of a dental suction removal installation in which a liquid-solid mixture is sucked out of the mouth of the patient by means of suction air and conveyed by way of a first suction section (2) which terminates in a separator (1) in which air is separated off and passed to the suction pump (5) and after separation of the air the solids are removed from the liquid, wherein an anti-foaming agent is added to the mixture within the first suction section (2) at intervals, characterised in that an additive which is capable of flow and which contains an anti-foaming agent is added to the mixture during the period of operation of the suction removal installation.

2. A method according to claim 1 wherein the solids are sedimented out of the liquid characterised in that the additive which contains the anti-foaming agent is added in a portion-wise manner to the liquid which collects above the sedimenting solids.

3. A method according to claim 1 characterised in that the additive which contains the anti-foaming agent is added at the mouthpiece.

4. A method according to one of claims 1 to 3 characterised in that the portion of the additive is sucked in by generating a reduced pressure in the first suction section (2).

5. Apparatus for carrying out the method according to one of claims 1 to 4 characterised in that it includes a container (8) for accommodating a supply of the additive containing an anti-foaming agent, a metering means (10) which is controlled by the suction air pressure, and an interval control means for the respective addition of a portion of the additive from the supply during the period of operation of the suction removal installation.

6. Apparatus according to claim 5 characterised in that the metering means includes two non-return valves (19, 20; 31, 32) and a metering pump disposed therebetween.

7. Apparatus according to claim 6 characterised in that the non-return valves are in the form of flap valves (19, 20) of which one is loaded by a weight.

8. Apparatus according to claim 6 characterised in that the metering pump is in the form of a diaphragm pump.

9. Apparatus according to claim 5 characterised in that the container (8) is arranged above the metering means (10) which includes a shut-off valve (12) disposed in the feed conduit (9, 9'), wherein the additive flows away out of the container (8) under the influence of the force of gravity.

10. Apparatus according to one of claims 5 to 9 characterised in that the outlet (17) of the metering means (10) is associated with a filling hopper (11) which is under atmospheric pressure and the outlet (30) of which opens within the first suction section (2) of the suction installation.

11. Apparatus according to claim 5 characterised in that the feed conduit (9) from the container (8) air-tightly opens within the first suction section (2) of the suction removal installation and a shut-off valve (12) is provided as the metering means.

## Revendications

1. Procédé pour empêcher les défaillances, provoquées par une formation de mousse, d'une installation d'aspiration dentaire dans laquelle un mélange de liquide et de matières solides est extrait par aspiration, au moyen d'air aspiré, de la bouche du patient et est acheminé par une première section d'aspiration (2) qui se termine dans un séparateur (1), dans lequel l'air est séparé et amené à la pompe aspirante (5) et, après séparation de l'air, les matières solides sont éliminées du liquide, le mélange recevant par intervalles, à l'intérieur de la première section d'aspiration (2), un agent antimousse, caractérisé en ce qu'un produit d'addition fluide contenant un agent antimousse est ajouté au mélange pendant la période de fonctionnement de l'installation d'aspiration.

2. Procédé selon la revendication 1, selon lequel les matières solides sont déposées par sédimentation à partir du liquide, caractérisé en ce que le produit d'addition contenant l'agent antimousse est ajouté par portions au liquide qui s'accumule au-dessus des matières solides se déposant par sédimentation.

3. Procédé selon la revendication 1, caractérisé en ce que le produit d'addition contenant l'agent antimousse est ajouté au niveau de la pièce buccale.

4. Procédé selon l'une quelconque des revendications 1 à 3, caractérisé en ce que la portion du produit d'addition est aspirée du fait de la création d'une dépression dans la première section d'aspiration (2).

5. Dispositif pour la mise en oeuvre du procédé selon l'une quelconque des revendications 1 à 4, caractérisé en ce qu'il comprend un réservoir (8) pour recevoir une réserve du produit d'addition contenant un agent antimousse, un dispositif de dosage (10) commandé par la pression de l'air aspiré, et un dispositif de commande d'intervalles pour l'amenée correspondante d'une portion du produit d'addition à partir de la réserve pendant la période de fonctionnement de l'installation d'aspiration.

6. Dispositif selon la revendication 5, caractérisé en ce que le dispositif de dosage comprend deux clapets antiretour (19, 20 ; 31, 32) et une pompe de dosage disposée entre ceux-ci.

7. Dispositif selon la revendication 6, caractérisé en ce que les clapets antiretour sont conçus comme des papillons (19, 20) dont l'un est à contrepoids.

8. Dispositif selon la revendication 6, caractérisé en ce que la pompe de dosage est conçue comme une pompe à diaphragme.

9. Dispositif selon la revendication 5, caractérisé en ce que le réservoir (8) est disposé au-dessus du dispositif de dosage (10), qui comprend un robinet à soupape d'arrêt (12) disposé dans le conduit d'alimentation (9, 9'), le produit d'addition s'écoulant hors du réservoir (8) du fait de la force de gravité.

10. Dispositif selon l'une quelconque des revendications 5 à 9, caractérisé en ce que la sortie (17) du dispositif de dosage (10) est associée à un entonnoir de remplissage (11) qui est à la pression atmosphérique et dont le bec (30) débouche à l'intérieur de la première section d'aspiration (2) de l'installation d'aspiration.

11. Dispositif selon la revendication 5, caractérisé en ce que le conduit d'alimentation (9) venant du réservoir (8) débouche à l'intérieur de la première section d'aspiration (2) de l'installation d'aspiration, de manière étanche à l'air, et en ce qu'il est prévu, comme dispositif de dosage, un robinet à soupape d'arrêt (12).
